# EUROPEAN PATENT APPLICATION

(11) **EP 4 632 956 A1**
(43) Date of publication of application: **15.10.2025**
(21) Application number: 23900374.2
(22) Date of filing: 08.11.2023
(51) Int. Cl.: H01R 9/22, H01M 50/507, H01M 50/588

(54) **TERMINAL BLOCK, BUS BAR DEVICE, AND BATTERY PACK**

(30) Priority: 05.12.2022 JP 2022194077
(71) Applicant: AESC Japan Ltd., Yokohama-Shi, Kanagawa 220-0012 (JP)
(72) Inventor: MATSUURA, Moritaka, Zama-shi, Kanagawa 252-0012 (JP)
(74) Representative: Mathys & Squire
(86) International application number: PCT/JP2023/040187
(87) International publication number: WO 2024/122252

(57) **Abstract**

A terminal block (400) includes a structure (410) provided with a first groove (412) through which a bus bar passes. The first groove (412) is open toward a plurality of directions crossing each other.

## Description

### TECHNICAL FIELD

The present invention relates to a terminal block, a bus bar device, and a battery pack.

### BACKGROUND ART

In recent years, battery packs used for various uses such as automobiles have been developed. As described in Patent Document 1, for example, a battery pack includes a fuel cell stack, a bus bar, and a service plug. The fuel cell stack and the service plug are electrically connected to each other via the bus bar. In the battery pack described in Patent Document 1, a part of the bus bar is fixed to a terminal block.

Patent Document 2 describes one example of a plurality of bus bars. One end of each of the bus bars is connected to an intelligent power module (IPM). The other end of each of the bus bars is fixed to a terminal block.

### RELATED DOCUMENT

### PATENT DOCUMENT

Patent Document 1: Japanese Patent Application Publication No. 2013-247084
Patent Document 2: Japanese Patent Application Publication No. 2004-140933

### DISCLOSURE OF THE INVENTION

### TECHNICAL PROBLEM

A bus bar does not just simply extend linearly but may extend in a non-linear shape such as substantially an L shape, for example. When the bus bar extends in the non-linear shape, the bent portion of the bus bar forms a corner portion of the bus bar. The corner portion of the bus bar, however, may be difficult to stably support.

One example of the object of the present invention is to stably support a bus bar. Another object of the present invention will become apparent from the description of the present specification.

### SOLUTION TO PROBLEM

An aspect according to the present invention is as follows.
[1] A terminal block including
   a structure provided with a groove through which a bus bar passes, in which
   the groove is open toward a plurality of directions crossing each other.
[2] The terminal block according to [1], in which
   the structure is provided with a plurality of the grooves through which a plurality of the bus bars passes.
[3] The terminal block according to [2], further including
   a partition wall that separates portions of the plurality of bus bars drawn from the plurality of grooves.
[4] The terminal block according to any one of [1] to [3], further including
   a fixing structure for fixing at least a part of the bus bar.
[5] A bus bar device including:
   the terminal block according to any one of [1] to [4]; and
   the bus bar that passes through the groove.
[6] The bus bar device according to [5], further including
   another bus bar electrically connected to the bus bar, in which
   a connected portion of the bus bar and the another bus bar is fixed to the terminal block.
[7] A battery pack including:
   a battery module;
   the bus bar device according to [5] or [6]; and
   a disconnect switch electrically connected to the
   battery module via the bus bar.

### ADVANTAGEOUS EFFECTS OF INVENTION

According to the aspect described above of the present invention, the bus bar can be stably supported.

### BRIEF DESCRIPTION OF THE DRAWINGS

[Fig. 1] A perspective view of a battery pack according to an embodiment.
[Fig. 2] A circuit diagram of a part of the battery pack according to the embodiment.
[Fig. 3] A rear view of a bus bar device according to the embodiment.
[Fig. 4] A right side view of the bus bar device according to the embodiment.
[Fig. 5] A perspective view of a terminal block according to the embodiment.
[Fig. 6] A front view of the terminal block according to the embodiment.
[Fig. 7] A rear view of the terminal block according to the embodiment.
[Fig. 8] A left side view of the terminal block according to the embodiment.
[Fig. 9] A right side view of the terminal block according to the embodiment.
[Fig. 10] A plan view of the terminal block according to the embodiment.
[Fig. 11] A bottom view of the terminal block according to the embodiment.
[Fig. 12] A perspective view illustrating the terminal block according to the embodiment with a cover attached thereto.
[Fig. 13] A perspective view of a terminal block according to a variant.

### DESCRIPTION OF EMBODIMENTS

Hereinafter, embodiments and variants of the present invention will be described by using drawings. In all the drawings, a similar component has a similar reference sign, and description thereof will be appropriately omitted.

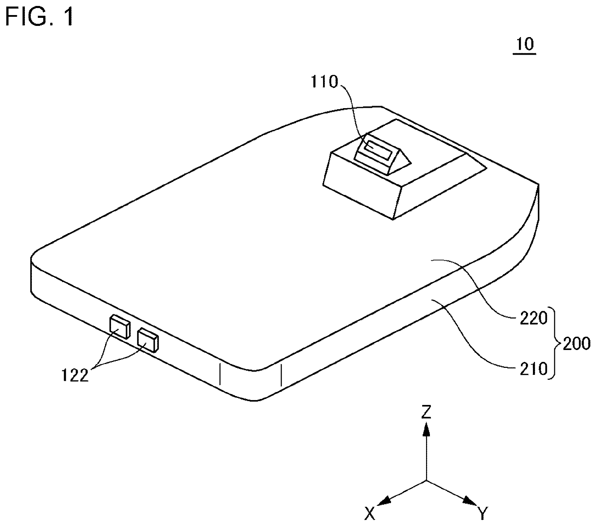

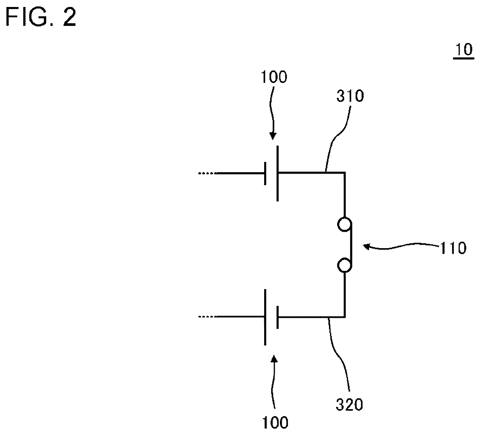

Fig. 1 is a perspective view of a battery pack 10 according to the embodiment. Fig. 2 is a circuit diagram of a part of the battery pack 10 according to the embodiment.

In the embodiment, the battery pack 10 is mounted on an automobile. Specifically, the battery pack 10 is mounted between the front wheel and the rear wheel of the automobile. Hereinafter, the battery pack 10 is described as being mounted on the automobile unless otherwise noted. The battery pack 10, however, can also be applied to the use other than the automobile.

In each drawing, an X direction, a Y direction, and a Z direction are illustrated for description. The X direction indicates a front-rear direction of the battery pack 10. The Y direction is orthogonal to the X direction. The Y direction indicates a left-right direction of the battery pack 10. The Z direction is orthogonal to both the X direction and the Y direction. The Z direction indicates an up-down direction of the battery pack 10. The arrow indicating the X direction and the arrows indicating the Y direction and the Z direction indicate a front direction, a left direction, and an upward direction of the battery pack 10, respectively. The relationship between the X direction, the Y direction, and the Z direction, and the front-rear direction, the left-right direction, and the up-down direction of the battery pack 10, however, is not limited to this example.

In the embodiment, the front-rear direction, the left-right direction, and the up-down direction of the battery pack 10 are determined by the automobile on which the battery pack 10 is mounted. The X direction, the Y direction, and the Z direction indicate a front-rear direction, a left-right direction, and an up-down direction of the automobile respectively. The arrow indicating the X direction, the arrow indicating the Y direction, and the arrow indicating the Z direction indicate a front direction, a left direction, and an upward direction of the automobile respectively. The relationship between the front-rear direction, the left-right direction, and the up-down direction of the battery pack 10, and the front-rear direction, the left-right direction, and the up-down direction of the car, however, is not limited to this example.

Hereinafter, a direction perpendicular to the Z direction is referred to as a horizontal direction as necessary.

As illustrated in Figs. 1 and 2, the battery pack 10 includes a plurality of battery modules 100, a disconnect switch 110, and a housing body 200. The plurality of battery modules 100 is connected in series or parallel. The plurality of battery modules 100 is housed in the housing body 200. The disconnect switch 110 may also be generally referred to as a service disconnect switch or a service plug, for example. The housing body 200 includes a lower case 210 and an upper case 220.

Each of the battery modules 100 includes a plurality of battery cells laminated in a predetermined direction. In each of the battery modules 100, for example, a plurality of battery cell groups including a plurality of battery cells connected in parallel is connected in series. Alternatively, a plurality of single battery cells may be connected in series.

As illustrated in Fig. 2, some battery modules 100 are electrically connected to each other via the disconnect switch 110. In the example illustrated in Fig. 2, one of the battery modules 100 and the disconnect switch 110 are electrically connected to each other via a first connection bus bar 310 described below. The other battery module 100 and the disconnect switch 110 are electrically connected to each other via a second connection bus bar 320 described below. The disconnect switch 110 has a function of interrupting the circuit that connects the battery modules 100. In the embodiment, the circuit that connects the battery modules 100 may be a high-voltage circuit. For this reason, the circuit that connects the battery modules 100 needs to be interrupted to secure safety of a worker of the battery pack 10 under a predetermined condition such as maintenance work of the battery pack 10 and an emergency stop of the battery pack 10. In the embodiment, the circuit that connects the battery modules 100 can be interrupted by operating the disconnect switch 110.

A pair of terminals 122 is provided in front of the lower case 210. The pair of terminals 122 is arranged substantially in parallel with the Y direction. The front end portion of each of the terminals 122 protrudes forward from the front surface of the lower case 210. The pair of terminals 122 is electrically connected to the plurality of battery modules 100 housed in the housing body 200.

The lower case 210 defines a housing space in which the plurality of battery modules 100 is housed. The upper case 220 covers the plurality of battery modules 100 from above. As illustrated in Fig. 1, the front surface of the disconnect switch 110 is exposed from the upper case 220. The worker of the battery pack 10 can therefore operate the disconnect switch 110 from the front of the battery pack 10.

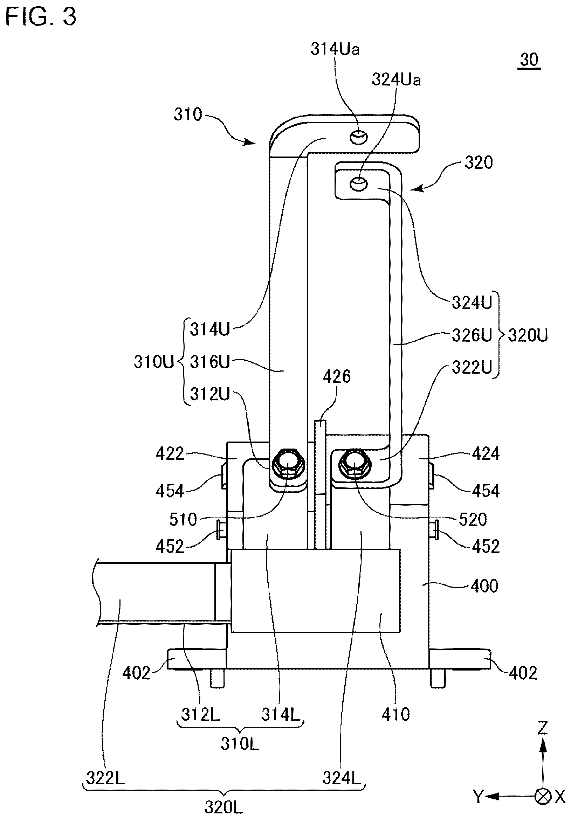

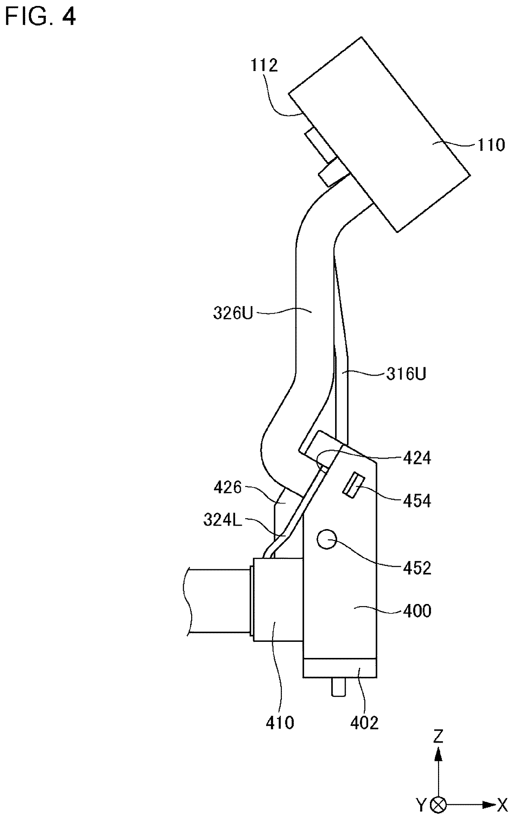

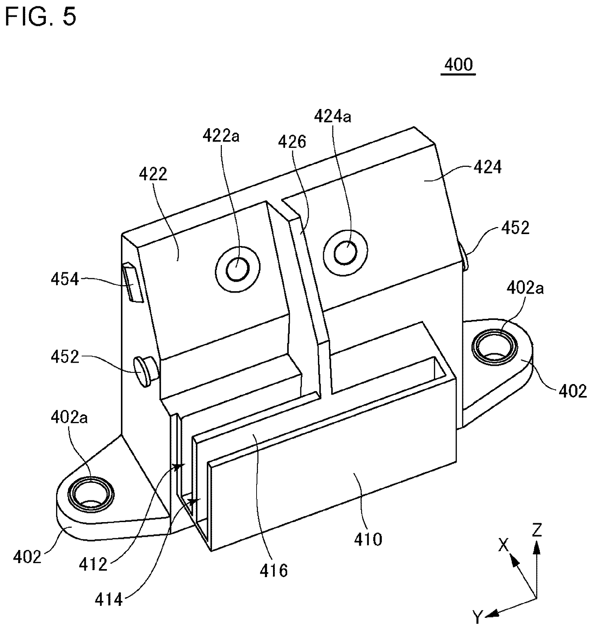

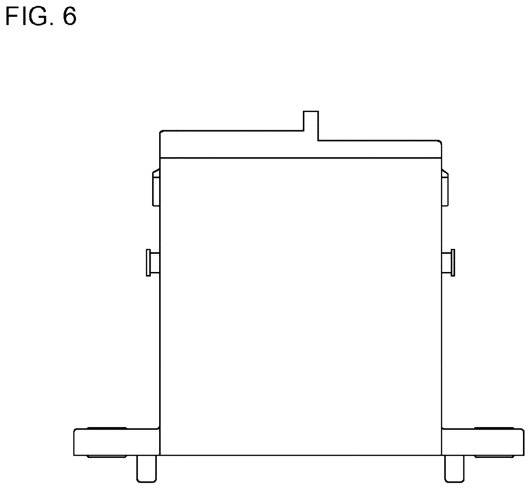

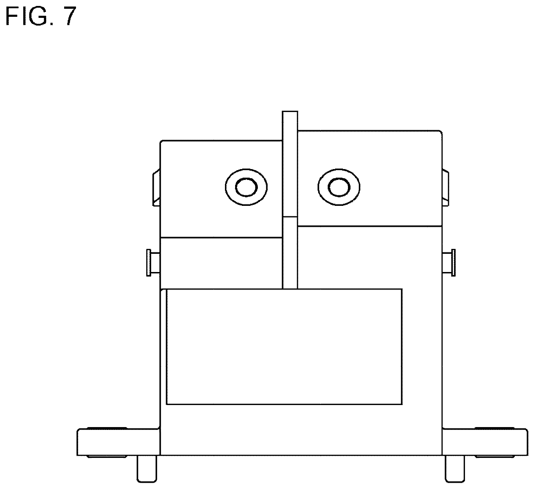

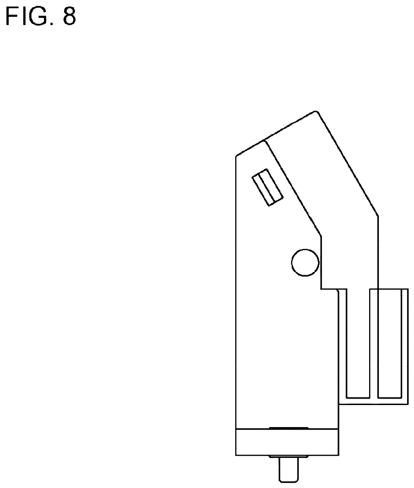

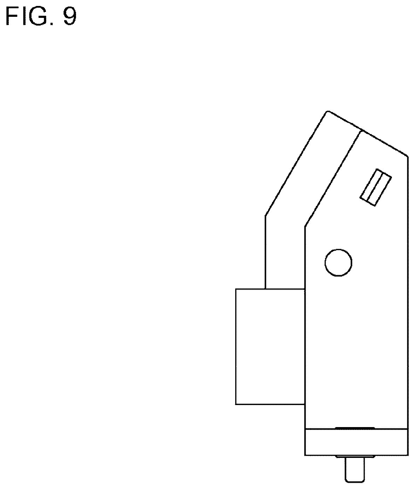

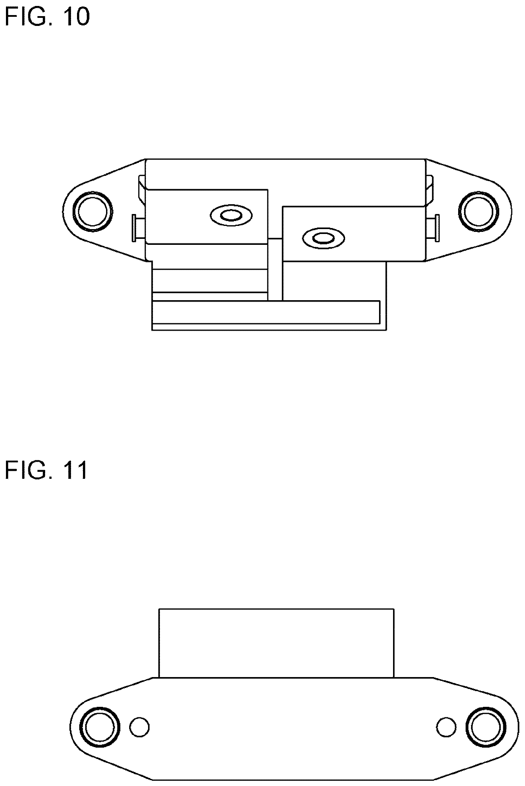

Fig. 3 is a rear view of a bus bar device 30 according to the embodiment. Fig. 4 is a right side view of the bus bar device 30 according to the embodiment. Fig. 5 is a perspective view of a terminal block 400 according to the embodiment. Fig. 6 is a front view of the terminal block 400 according to the embodiment. Fig. 7 is a rear view of the terminal block 400 according to the embodiment. Fig. 8 is a left side view of the terminal block 400 according to the embodiment. Fig. 9 is a right side view of the terminal block 400 according to the embodiment. Fig. 10 is a plan view of the terminal block 400 according to the embodiment. Fig. 11 is a bottom view of the terminal block 400 according to the embodiment.

The bus bar device 30 includes the first connection bus bar 310, the second connection bus bar 320, and the terminal block 400. The bus bar device 30 is housed in the housing body 200.

First, the terminal block 400 will be described with reference to Figs. 3 to 5.

A pair of protrusions 402 is provided on the Y direction both sides of the bottom portion of the terminal block 400. Each of the protrusions 402 is provided with a lower through hole 402a. A fastener such as a screw, not illustrated, can extend through the lower through hole 402a. Each of the protrusions 402 can be therefore fixed to the bottom surface of the lower case 210 by the fastener. Thus, the terminal block 400 can be fixed to the lower case 210. The method of fixing the terminal block 400 to the lower case 210, however, is not limited to this example.

The rear surface side of the terminal block 400 is provided with a structure 410. The structure 410 is provided with a first groove 412 and a second groove 414. The first groove 412 and the second groove 414 extend substantially in parallel with the Y direction. The second groove 414 is located further back than the first groove 412. The length of the second groove 414 in the Y direction is greater than the length of the first groove 412 in the Y direction. The left end of the first groove 412 and the left end of the second groove 414 are substantially aligned in the Y direction. The right end of the second groove 414 is located further to the right than the right end of the first groove 412. The first groove 412 and the left portion of the second groove 414 are separated from each other by a lower partition wall 416. The lower partition wall 416 is an insulator such as resin, for example.

The rear surface of the terminal block 400 includes a first inclined surface 422 and a second inclined surface 424. The first inclined surface 422 and the second inclined surface 424 are in a higher position than the structure 410. The first inclined surface 422 is inclined at an angle toward the front from the lower end to the upper end of the first inclined surface 422. The second inclined surface 424 is inclined at an angle toward the front from the lower end to the upper end of the second inclined surface 424. The first inclined surface 422 and the second inclined surface 424 are separated from each other by an upper partition wall 426. The upper partition wall 426 is an insulator such as resin, for example. The first inclined surface 422 is located on the left side of the upper partition wall 426. The second inclined surface 424 is located on the right side of the upper partition wall 426.

Next, the first connection bus bar 310 and the second connection bus bar 320 will be described with reference to Figs. 3 to 5. The first connection bus bar 310 and the second connection bus bar 320 are formed of a conductor such as metal, for example.

As illustrated in Fig. 3, the first connection bus bar 310 includes a first lower bus bar 310L and a first upper bus bar 310U. The first lower bus bar 310L includes a first lower extension portion 312L and a first drawn portion 314L. The first lower bus bar 310L extends substantially in an L shape between the first lower extension portion 312L and the first drawn portion 314L. The first upper bus bar 310U includes a first lower fixed end 312U, a first upper fixed end 314U, and a first upper extension portion 316U. The first upper bus bar 310U extends substantially in an L shape between the first lower fixed end 312U and the first upper fixed end 314U.

As illustrated in Fig. 3, the second connection bus bar 320 includes a second lower bus bar 320L and a second upper bus bar 320U. The second lower bus bar 320L includes a second lower extension portion 322L and a second drawn portion 324L. The second lower bus bar 320L extends substantially in an L shape between the second lower extension portion 322L and the second drawn portion 324L. The second upper bus bar 320U includes a second lower fixed end 322U, a second upper fixed end 324U, and a second upper extension portion 326U. The second upper bus bar 320U extends substantially in an arch shape between the second lower fixed end 322U and the second upper fixed end 324U.

At least one of at least a part of the surface of the first connection bus bar 310 and at least a part of the surface of the second connection bus bar 320 may be an insulator. For example, at least a part of the surface of the first connection bus bar 310 and at least a part of the surface of the second connection bus bar 320 are covered with an insulating film. In this case, the electrical insulation between the first connection bus bar 310 and the second connection bus bar 320 can be easily secured.

The first lower bus bar 310L and the second lower bus bar 320L will be described with reference to Figs. 3 to 5.

The first lower extension portion 312L extends substantially in parallel with the Y direction. The first lower extension portion 312L may be partially bent. The first lower extension portion 312L has a substantially plate shape having a thickness substantially in parallel with the X direction.

The first drawn portion 314L is drawn toward the upper front from the right end portion of the first lower extension portion 312L. The upper end portion of the first drawn portion 314L is disposed substantially in parallel with the first inclined surface 422 of the terminal block 400. In other words, the upper end portion of the first drawn portion 314L has a substantially plate shape having a thickness substantially perpendicular to the first inclined surface 422. In one example, the upper end portion of the first drawn portion 314L is inclined relative to the first lower extension portion 312L by bending the drawn portion drawn from the first lower extension portion 312L. The method of forming the first lower extension portion 312L and the first drawn portion 314L, however, is not limited to this example. For example, the first lower extension portion 312L and the first drawn portion 314L may be bonded to each other by welding.

The corner portion of the first lower bus bar 310L between the first lower extension portion 312L and the first drawn portion 314L is disposed in the first groove 412. Thus, the corner portion of the first lower bus bar 310L can be stably supported. Specifically, the left end portion of the first groove 412 is open toward the left. The upper end portion of the first groove 412 is open upward. As a result, the first lower bus bar 310L can pass through the first groove 412 between the opening of the left end portion of the first groove 412 and the opening of the upper end portion of the first groove 412. In the embodiment, the first lower extension portion 312L is drawn toward the left through the opening of the left end portion of the first groove 412. The first drawn portion 314L is drawn upward through the opening of the upper end portion of the first groove 412.

The position of the plurality of openings of the first groove 412 can be different according to the shape of the first lower bus bar 310L. In other words, the first groove 412 can be open toward a plurality of directions crossing each other according to the extending direction of the first lower extension portion 312L and the extending direction of the first drawn portion 314L. For example, when the first lower extension portion 312L is drawn to the lower left from the first groove 412, the first groove 412 can be open toward the lower left direction. When the first drawn portion 314L is drawn to the upper right from the first groove 412, the first groove 412 can be open toward the upper right direction.

The second lower extension portion 322L extends substantially in parallel with the Y direction. The second lower extension portion 322L may be partially bent. The second lower extension portion 322L has a substantially plate shape having a thickness substantially in parallel with the X direction.

The second drawn portion 324L is drawn toward the upper front from the right end portion of the second lower extension portion 322L. The upper end portion of the second drawn portion 324L is disposed substantially in parallel with the second inclined surface 424 of the terminal block 400. In other words, the upper end portion of the second drawn portion 324L has a substantially plate shape having a thickness substantially perpendicular to the second inclined surface 424.

The corner portion of the second lower bus bar 320L between the second lower extension portion 322L and the second drawn portion 324L is disposed in the second groove 414. Thus, the corner portion of the second lower bus bar 320L can be stably supported in the same way as the corner portion of the first lower bus bar 310L. The second groove 414 is open toward a plurality of directions crossing each other in the same way as the first groove 412.

The second lower extension portion 322L and the second drawn portion 324L are separated from each other by the lower partition wall 416. The lower partition wall 416 therefore can suppress the contact and the short circuit between the second lower extension portion 322L and the second drawn portion 324L. In the embodiment, the height of the lower partition wall 416 in the Z direction is equal to or greater than at least one of the width of the first lower extension portion 312L in the Z direction and the width of the second lower extension portion 322L in the Z direction. Specifically, the height of the lower partition wall 416 is higher than both these widths. As a result, the contact and the short circuit between the first lower extension portion 312L and the first drawn portion 314L can be further suppressed as compared with the case where the height of the lower partition wall 416 is lower than both these widths. The height of the lower partition wall 416 in the Z direction, however, may be lower than both the width of the first lower extension portion 312L in the Z direction and the width of the first drawn portion 314L in the Z direction.

The first upper bus bar 310U and the second upper bus bar 320U will be described with reference to Figs. 3 to 5.

The first lower fixed end 312U is drawn toward the lower rear from the lower end portion of the first upper extension portion 316U. The first lower fixed end 312U is disposed substantially in parallel with the first inclined surface 422 of the terminal block 400. In other words, the first lower fixed end 312U has a substantially plate shape having a thickness substantially perpendicular to the first inclined surface 422. In one example, the first lower fixed end 312U is inclined relative to the first upper extension portion 316U by bending the lower end portion of the first upper extension portion 316U. The method of forming the first lower fixed end 312U and the first upper extension portion 316U, however, is not limited to this example. The first lower fixed end 312U and the upper end portion of the first drawn portion 314L are electrically connected to each other. The connected portion of the first lower fixed end 312U and the first drawn portion 314L is fixed to the first inclined surface 422 by a first fastener 510. In the embodiment, the first fastener 510 is a bolt. The first fastener 510, however, may be a fastener other than the bolt. The first fastener 510 extends through the first lower fixed end 312U and the upper end portion of the first drawn portion 314L in order and is inserted into a first fastening hole 422a of the first inclined surface 422. Thus, the first fastening hole 422a and the first fastener 510 are at least a part of a fixing structure for fixing the first lower fixed end 312U and the upper end portion of the first drawn portion 314L to the first inclined surface 422.

The first upper fixed end 314U is drawn toward the right from the upper end portion of the first upper extension portion 316U. The first upper fixed end 314U is disposed substantially in parallel with an attachment surface 112 of the disconnect switch 110. In other words, the first upper fixed end 314U has a substantially plate shape having a thickness substantially perpendicular to the attachment surface 112. In the embodiment, the attachment surface 112 is a substantially flat surface facing to the lower rear. The first upper fixed end 314U is fixed to the attachment surface 112 by a fastener such as a bolt, not illustrated. The fastener extends through a first upper through hole 314Ua of the first upper fixed end 314U and is inserted into a fastening hole of the attachment surface 112. Thus, the fastener and the fastening hole of the attachment surface 112 are at least a part of a fixing structure for fixing the first upper fixed end 314U to the attachment surface 112.

The first upper extension portion 316U extends substantially in parallel with the Z direction between the first lower fixed end 312U and the first upper fixed end 314U. The first upper extension portion 316U may be partially bent. The first upper extension portion 316U has a substantially plate shape having a thickness substantially in parallel with the X direction.

The second lower fixed end 322U is drawn toward the left from the lower end portion of the second upper extension portion 326U. The second lower fixed end 322U is disposed substantially in parallel with the second inclined surface 424 of the terminal block 400. In other words, the second lower fixed end 322U has a substantially plate shape having a thickness substantially perpendicular to the second inclined surface 424. In one example, the second lower fixed end 322U is substantially perpendicular to the second upper extension portion 326U by bending the lower end portion of the second upper extension portion 326U. The method of forming the second lower fixed end 322U and the second upper extension portion 326U, however, is not limited to this example. The second lower fixed end 322U and the upper end portion of the second drawn portion 324L are electrically connected to each other. The connected portion of the second lower fixed end 322U and the second drawn portion 324L is fixed to the second inclined surface 424 by a second fastener 520. In the embodiment, the second fastener 520 is a bolt. The second fastener 520, however, may be a fastener other than the bolt. The second fastener 520 extends through the second lower fixed end 322U and the upper end portion of the second drawn portion 324L in order and is inserted into a second fastening hole 424a of the second inclined surface 424. Thus, the second fastening hole 424a and the second fastener 520 are at least a part of a fixing structure for fixing the second lower fixed end 322U and the upper end portion of the second drawn portion 324L to the second inclined surface 424.

The second upper fixed end 324U is drawn toward the left from the upper end portion of the second upper extension portion 326U. The second upper fixed end 324U is disposed substantially in parallel with the attachment surface 112 of the disconnect switch 110. In other words, the second upper fixed end 324U has a substantially plate shape having a thickness substantially perpendicular to the attachment surface 112. In one example, the second upper fixed end 324U is substantially perpendicular to the second upper extension portion 326U by bending the upper end portion of the second upper extension portion 326U. The method of forming the second upper fixed end 324U and the second upper extension portion 326U, however, is not limited to this example. The second upper fixed end 324U is fixed to the attachment surface 112 by a fastener such as a bolt, not illustrated. The fastener extends through a second upper through hole 324Ua of the second upper fixed end 324U and is inserted into the fastening hole of the attachment surface 112. Thus, the fastener and the fastening hole of the attachment surface 112 are at least a part of a fixing structure for fixing the second upper fixed end 324U to the attachment surface 112.

The second upper extension portion 326U extends substantially in parallel with the Z direction between the second lower fixed end 322U and the second upper fixed end 324U. The second upper extension portion 326U may be partially bent. The second upper extension portion 326U has a substantially plate shape having a thickness substantially in parallel with the Y direction.

In the embodiment, the first fastener 510 and the second fastener 520 are arranged substantially in parallel with the Y direction. The first upper through hole 314Ua, the second upper through hole 324Ua, and the second fastener 520 are arranged in a common virtual plane substantially perpendicular to the Y direction. The second upper through hole 324Ua is located substantially above the second fastener 520. The second upper through hole 324Ua is located on the lower front side of the first upper through hole 314Ua along the attachment surface 112.

The connected portion of the first lower fixed end 312U and the first drawn portion 314L and the connected portion of the second lower fixed end 322U and the second drawn portion 324L are separated from each other by the upper partition wall 426. The upper partition wall 426 therefore can suppress the contact and the short circuit between these connected portions. In the embodiment, the height of the upper partition wall 426 is equal to or greater than at least one of the thickness of the connected portion of the first lower fixed end 312U and the first drawn portion 314L and the thickness of the connected portion of the second lower fixed end 322U and the second drawn portion 324L. Specifically, the height of the upper partition wall 426 is higher than both these thicknesses. As a result, the contact and the short circuit between these connected portions can be further suppressed as compared with the case where the height of the upper partition wall 426 is lower than both these thicknesses. The height of the upper partition wall 426, however, may be lower than both the thicknesses of these connected portions.

As illustrated in Fig. 3, the first upper extension portion 316U extends from the first fastener 510 toward the disconnect switch 110. The second upper extension portion 326U extends toward the disconnect switch 110 from the position offset from the second fastener 520 in the Y direction toward the opposite side of the first fastener 510. The distance between the first upper extension portion 316U and the second upper extension portion 326U in the Y direction can be therefore increased as compared with the case where the second upper extension portion 326U and the second fastener 520 are aligned in the Y direction. For this reason, the electrical insulation between the first upper extension portion 316U and the second upper extension portion 326U can be easily secured as compared to the case described above.

As illustrated in Fig. 3, the first upper extension portion 316U extends toward the terminal block 400 from the position offset from the first upper through hole 314Ua toward the left side. The second upper extension portion 326U extends toward the terminal block 400 from the position offset from the second upper through hole 324Ua toward the right side. The distance between the first upper extension portion 316U and the second upper extension portion 326U in the Y direction can be therefore increased as compared with the case where the second upper extension portion 326U and the second upper through hole 324Ua are aligned in the Y direction. For this reason, the electrical insulation between the first upper extension portion 316U and the second upper extension portion 326U can be easily secured as compared to the case described above.

The shape of each of the first upper bus bar 310U and the second upper bus bar 320U is not limited to the shape according to the embodiment. For example, the second upper extension portion 326U may be aligned with the second fastener 520 and the second upper through hole 324Ua in the Y direction.

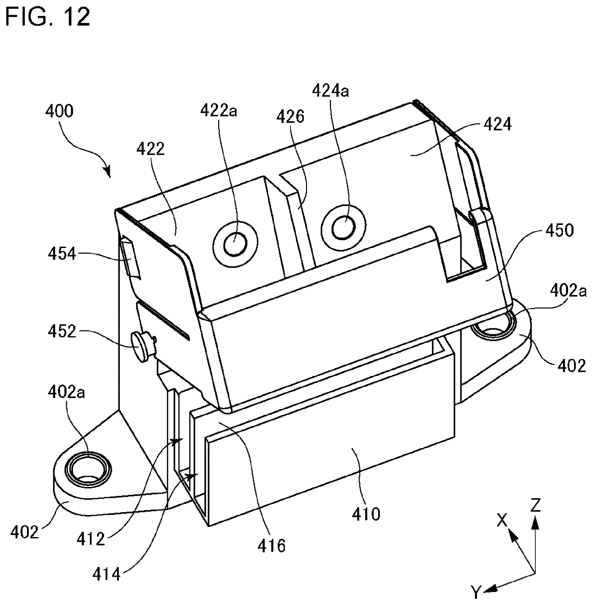

Fig. 12 is a perspective view illustrating the terminal block 400 according to the embodiment with a cover 450 attached thereto.

The cover 450 covers at least a part of the first fastening hole 422a and at least a part of the second fastening hole 424a when viewed from the rear. The cover 450 therefore can cover the connected portion of the first lower fixed end 312U and the first drawn portion 314L and the connected portion of the second lower fixed end 322U and the second drawn portion 324L together with the first fastener 510 and the second fastener 520 as viewed from the rear when the first connection bus bar 310 and the second connection bus bar 320 are installed on the terminal block 400. As a result, the connected portion of the first lower fixed end 312U and the first drawn portion 314L and the connected portion of the second lower fixed end 322U and the second drawn portion 324L can be electrically insulated from a surrounding member by the cover 450.

The cover 450 can be attached to and detached from the terminal block 400. Specifically, the cover 450 can rotate about a pair of shafts 452. The cover 450 can be attached to and detached from the pair of shafts 452. The pair of shafts 452 is provided on both side surfaces of the terminal block 400 in the Y direction. The cover 450 can engage with a pair of engagement portions 454. The pair of engagement portions 454 is provided on both side surfaces of the terminal block 400 in the Y direction.

In the embodiment, when the cover 450 is removed from the terminal block 400, the connected portion of the first lower fixed end 312U and the first drawn portion 314L can be fixed to the first inclined surface 422 by the first fastener 510, and the connected portion of the second lower fixed end 322U and the second drawn portion 324L can be fixed to the second inclined surface 424 by the second fastener 520. In this case, after these connected portions are fixed to these inclined surfaces, the cover 450 can be attached to the terminal block 400. The workability for installing the first connection bus bar 310 and the second connection bus bar 320 on the terminal block 400 can be improved accordingly.

Next, one example of a method of mounting the bus bar device 30 on the battery pack 10 will be described.

First, the terminal block 400 is fixed to the bottom surface of the lower case 210. Specifically, the pair of protrusions 402 is fixed to the bottom surface of the lower case 210 by passing a fastener such as a screw through the lower through hole 402 of each of the pair of protrusions 402. Next, the first lower bus bar 310L and the second lower bus bar 320L are installed on the terminal block 400. Specifically, the corner portion of the first lower bus bar 310L between the first lower extension portion 312L and the first drawn portion 314L is disposed in the first groove 412. The corner portion of the second lower bus bar 320L between the second lower extension portion 322L and the second drawn portion 324L is disposed in the second groove 414.

At the same time as the step described above or before and after the step described above, the first upper bus bar 310U and the second upper bus bar 320U are attached to the attachment surface 112 of the disconnect switch 110. Specifically, the first upper fixed end 314U is fixed to the attachment surface 112 by passing a fastener such as a bolt through the first upper through hole 314Ua of the first upper fixed end 314U. Similarly, the second upper fixed end 324U is fixed to the attachment surface 112 by passing a fastener such as a bolt through the second upper through hole 324Ua of the second upper fixed end 324U.

Next, the disconnect switch 110 is disposed substantially above the terminal block 400. In this state, the first lower fixed end 312U and the upper end portion of the first drawn portion 314L overlap each other, and the first lower fixed end 312U and the first drawn portion 314L are fixed to the first inclined surface 422 by the first fastener 510. Similarly, the second lower fixed end 322U and the upper end portion of the second drawn portion 324L overlap each other, and the second lower fixed end 322U and the second drawn portion 324L are fixed to the second inclined surface 424 by the second fastener 520.

Next, the cover 450 is attached to the terminal block 400. Thus, the connected portion of the first lower fixed end 312U and the first drawn portion 314L and the connected portion of the second lower fixed end 322U and the second drawn portion 324L are covered with the cover 450.

In the embodiment, the first connection bus bar 310 is separable into the first lower bus bar 310L and the first upper bus bar 310U. The second connection bus bar 320 is separable into the second lower bus bar 320L and the second upper bus bar 320U. The installation work of the first lower bus bar 310L and the second lower bus bar 320L on the terminal block 400 and the attachment work of the first upper bus bar 310U and the second upper bus bar 320U to the disconnect switch 110 can be therefore performed independently of each other. For this reason, the workability for mounting the bus bar device 30 on the battery pack 10 can be easily improved.

The structure of the first connection bus bar 310 is not limited to the structure according to the embodiment. For example, the first lower bus bar 310L and the first upper bus bar 310U may be integral. Similarly, the second lower bus bar 320L and the second upper bus bar 320U may be integral.

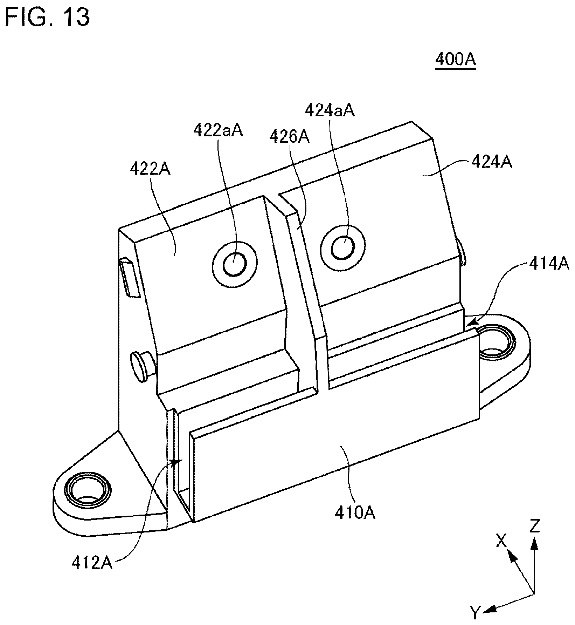

Fig. 13 is a perspective view of a terminal block 400A according to a variant. The terminal block 400A according to the variant is the same as the terminal block 400 according to the embodiment except for the following points.

The structure 410A according to the variant is provided with a first groove 412A and a second groove 414A. The first groove 412A and the second groove 414A are arranged substantially in parallel with the Y direction.

The upper end portion of the first groove 412A is open upward. As a result, a bus bar, not illustrated, can be drawn upward through the opening of the upper end portion of the first groove 412A. The left end portion of the first groove 412A is open toward the left. As a result, the bus bar can be drawn toward the left through the opening of the left end portion of the first groove 412A. In the variant, therefore, the corner portion of the bus bar can be also disposed in the first groove 412A as in the embodiment. In the variant, accordingly, the bus bar can be also stably supported as in the embodiment.

The upper end portion of the second groove 414A is open upward. As a result, a bus bar, not illustrated, can be drawn upward through the opening of the upper end portion of the second groove 414A. The right end portion of the second groove 414A is open toward the right. As a result, the bus bar can be drawn toward the right through the opening of the right end portion of the second groove 414A. In the variant, therefore, the corner portion of the bus bar can be also disposed in the second groove 414A as in the embodiment. In the variant, accordingly, the bus bar can be also stably supported as in the embodiment.

The bus bar drawn upward from the first groove 412A can be fixed to a first inclined surface 422A by a fastener such as a bolt inserted into a first fastening hole 422aA as in the embodiment. The bus bar drawn upward from the second groove 414A can be fixed to a second inclined surface 424A by a fastener such as a bolt inserted into a second fastening hole 424aA as in the embodiment. In the variant, the first inclined surface 422A and the second inclined surface 424A are separated from each other by a partition wall 426A as in the embodiment. In the variant, the lower end portion of the partition wall 426A separates the right end portion of the first groove 412A and the left end portion of the second groove 414A from each other. The contact and the short circuit between the bus bar installed in the first groove 412A and the bus bar installed in the second groove 414A can be suppressed accordingly.

While the embodiments and the variants of the present invention have been described with reference to the drawings, these are only exemplification of the present invention, and various configurations other than the embodiments and variants described above can also be employed.

For example, the number of grooves provided in the structure of the terminal block is not limited to two. The number of the grooves provided in the structure can be different according to the number of bus bars supported by the structure. For example, when the number of the bus bars supported by the structure is only one, the number of the grooves may be only one. Alternatively, when the number of the bus bars supported by the structure is three or more, the number of the grooves may be three or more.

One aspect of the invention disclosed in the present specification is as follows.
[1.1] A terminal block including
   a structure provided with a groove through which a bus bar passes, in which
   the groove is open toward a plurality of directions crossing each other.
[1.2] The terminal block according to [1.1], in which
   the structure is provided with a plurality of the grooves through which a plurality of the bus bars passes.
[1.3] The terminal block according to [1.2], further including
   a partition wall that separates portions of the plurality of bus bars drawn from the plurality of grooves.
[1.4] The terminal block according to any one of [1.1] to [1.3], further including
   a fixing structure for fixing at least a part of the bus bar.
[1.5] A bus bar device including:
   the terminal block according to any one of [1.1] to [1.4]; and
   the bus bar that passes through the groove.
[1.6] The bus bar device according to [1.5], further including
   another bus bar electrically connected to the bus bar, in which
   a connected portion of the bus bar and the another bus bar is fixed to the terminal block.
[1.7] A battery pack including:
   a battery module;
   the bus bar device according to [1.5] or [1.6]; and
   a disconnect switch electrically connected to the battery module via the bus bar.

Another aspect of the invention disclosed in the present specification is as follows.
[2.1] A bus bar device including:
   a terminal block having a first fixing structure and a second fixing structure arranged in a predetermined direction;
   a first bus bar fixed to the first fixing structure, at least a part of the first bus bar extending from the first fixing structure toward a disconnect switch; and
   a second bus bar fixed to the second fixing structure, at least a part of the second bus bar extending toward the disconnect switch from a position offset from the second fixing structure in the predetermined direction toward an opposite side of the first fixing structure.
[2.2] A bus bar device including:
   a disconnect switch having a third fixing structure and a fourth fixing structure arranged in a predetermined direction;
   a first bus bar fixed to the third fixing structure, at least a part of the first bus bar extending toward a terminal block from a position offset from the third fixing structure in a direction crossing the predetermined direction; and
   a second bus bar fixed to the fourth fixing structure, at least a part of the second bus bar extending toward the terminal block from a position offset from the fourth fixing structure in the direction crossing the predetermined direction toward an opposite side of the first bus bar.
[2.3] A battery pack including:
   a battery module;
   the bus bar device according to [2.1] or [2.2]; and
   a disconnect switch electrically connected to the battery module via the bus bar device.

This application claims priority based on Japanese patent application No. 2022-194077, filed on December 5, 2022, the disclosure of which is incorporated herein in its entirety by reference.

### REFERENCE SIGNS LIST

10 Battery pack, 30 Bus bar device, 100 Battery module, 110 Disconnect switch, 112 Attachment surface, 122 Terminal, 200 Housing body, 210 Lower case, 220 Upper case, 310 First connection bus bar, 310L First lower bus bar, 310U First upper bus bar, 312L First lower extension portion, 312U First lower fixed end, 314L First drawn portion, 314U First upper fixed end, 314Ua First upper through hole, 316U First upper extension portion, 320 Second connection bus bar, 320L Second lower bus bar, 320U Second upper bus bar, 322L Second lower extension portion, 322U Second lower fixed end, 324L Second drawn portion, 324U Second upper fixed end, 324Ua Second upper through hole, 326U Second upper extension, portion, 400, 400A Terminal block, 402 Protrusion, 402a Lower through hole, 410, 410A Structure, 412, 412A First groove, 414, 414A Second groove, 416 Lower partition wall, 422, 422A First inclined surface, 422a, 422aA First fastening hole, 424, 424A Second inclined surface, 424a, 424aA Second fastening hole, 426 Upper partition wall, 426A Partition wall, 450 Cover, 452 Shaft, 454 Engagement portion 510 First fastener, 520 Second fastener

## Claims

1. A terminal block comprising
a structure provided with a groove through which a bus bar passes, wherein
the groove is open toward a plurality of directions crossing each other.

2. The terminal block according to claim 1, wherein the structure is provided with a plurality of the grooves through which a plurality of the bus bars passes.

3. The terminal block according to claim 2, further comprising
a partition wall that separates portions of the plurality of bus bars drawn from the plurality of grooves.

4. The terminal block according to any one of claims 1 to 3, further comprising
a fixing structure for fixing at least a part of the bus bar.

5. A bus bar device comprising:
the terminal block according to claim 1; and
the bus bar that passes through the groove.

6. The bus bar device according to claim 5, further comprising
another bus bar electrically connected to the bus bar, wherein
a connected portion of the bus bar and the another bus bar is fixed to the terminal block.

7. A battery pack comprising:
a battery module;
the bus bar device according to claim 5; and
a disconnect switch electrically connected to the battery module via the bus bar.
